# EUROPÄISCHE PATENTSCHRIFT

(11) **EP 2 467 502 B1**
(45) Veröffentlichungstag und Bekanntmachung des Hinweises auf die Patenterteilung: **13.01.2016**
(21) Anmeldenummer: 10737317.7
(22) Anmeldetag: 26.07.2010
(51) Int. Cl.: C08H 1/06, C08L 89/06

(54) **VERFAHREN ZUR HERSTELLUNG VON LEDERPELLETS**
METHOD FOR PRODUCING LEATHER PELLETS
PROCÉDÉ DE PRODUCTION DE GRANULÉS DE CUIR

(30) Priorität: 18.08.2009 DE 102009037792
(43) Veröffentlichungstag der Anmeldung: 27.06.2012
(73) Patentinhaber: Bader GmbH & Co. KG, 73033 Göppingen (DE)
(72) Erfinder: BADER, Thomas, Christof, 73033 Göppingen (DE)
(74) Vertreter: Wolf, Eckhard
(86) Internationale Anmeldenummer: PCT/EP2010/060797
(87) Internationale Veröffentlichungsnummer: WO 2011/020680

(56) Entgegenhaltungen:
- EP-A1- 1 475 413
- WO-A1-2007/121497
- WO-A1-2009/135239
- H. Domininghaus: "Die Kunststoffe und ihre Eigenschaften", 2005, Springer-Verlag, Berlin, XP002621509, ISBN: 3-450-21410-0 Seite 291,294, das ganze Dokument
- H. Domininghaus: "Die Kunststoffe und ihre Eigenschaften", 1998, Springer-Verlag, Berlin, XP002621392, ISBN: 3-540-62659-X Seite 135,1136, das ganze Dokument

## Beschreibung

Die Erfindung betrifft ein Verfahren zur Herstellung von Lederpellets, bei welchem Falzspäne als Abfallprodukt bei der Lederherstellung gewonnen und die Falzspäne zu einem Lederfasern enthaltenden Ledermahlgut zerkleinert werden.

Im Zuge der industriellen Lederherstellung werden die Tierhäute in einem der Verfahrensschritte gefalzt, d. h. mittels einer Spiralmesserwalze auf eine gleichmäßige Dicke, z.B. 1,5 mm, rückseitig abgehobelt. Das abgehobelte Material sind die so genannten Falzspäne, die in einer Menge von etwa 33% des Hautgewichts anfallen. Bisher wurden die Falzspäne gerbartabhängig entweder zur Lederfaserstoffherstellung (Chromfalzspäne) oder zur Kompostierung (chromfreie Falzspäne) verwendet, sowie auf Deponien verbracht.

Es ist ein Verfahren der eingangs angegebenen Art bekannt (WO 2007/121497 A), bei welchem Lederabfälle in Form von Falzspänen zu einem Lederfasern enthaltenden Ledermahlgut zerkleinert und in dieser Form einer Weiterbearbeitung zugeführt werden.

In allen diesen Fällen sind die zukünftigen Verwertungs- und Entsorgungswege der Lederabfälle ungewiss und mit Kosten verbunden.

Ausgehend hiervon besteht die Aufgabe der vorliegenden Erfindung darin, ein Verfahren zur Nutzbarmachung von bei der Lederherstellung anfallenden Falzspäne zu entwickeln.

Zur Lösung wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht vor allem von dem Gedanken aus, dass sich die Falzspäne sinnvoll nutzen und industriell weiterverarbeiten lassen, wenn sie zunächst zu einem Zwischenprodukt verarbeitet werden. Dieses Zwischenprodukt erhält die Form von Lederpellets, die bei dem erfindungsgemäßen Verfahren durch die folgenden Schritte hergestellt werden: Falzspäne werden als Abfallprodukt bei der Lederherstellung gewonnen; die Falzspäne werden zu einem Lederfasern enthaltenden Ledermahlgut zerkleinert; die zerkleinerten Falzspäne werden zu Lederpellets gepresst; und die Lederpellets werden bis zu einem Restfeuchtegehalt von maximal 30 Gew.-% getrocknet. Dabei können die Falzspäne sowohl bei einer Chromgerbung als auch bei einer Gerbung mit Glutardialdehyd gewonnen werden.

Zweckmäßig werden die Falzspäne zunächst durch Feinmahlen zu einer Faser- bzw. Korngröße von etwa 0,5 mm zerkleinert. Das Pressen der Pellets kann in einer herkömmlichen Pelletierpresse erfolgen. Je nach den Anforderungen der nachfolgenden Weiterverarbeitungsprozesse können die gepressten Lederpellets zu einem Restfeuchtegehalt von 5 - 30 Gew.-% getrocknet werden. Für die Verarbeitung in einigen Maschinentypen ist ein geringerer Restfeuchtegehalt erforderlich, da diese Maschinen sonst durch die Feuchtigkeit einer Korrosionsgefahr ausgesetzt wären, während andere Maschinentypen diesbezüglich unempfindlicher sind.

Die Lederpellets sind im Gegensatz zu dem Ledermahlgut leicht als Schüttgut zu handhaben und weisen verpackt eine Lagerfähigkeit von Monaten oder sogar Jahren auf.

Die gepressten Lederpellets sind ein Zwischenprodukt, das sich auf verschiedene Weisen weiterverarbeiten lässt. Ein erfindungsgemäßes Verfahren zur Weiterverarbeitung der Lederpellets sieht vor, dass die Pellets im Verhältnis von etwa 10 - 95 % mit einem thermoplastischem Polymerwerkstoff vermischt und zu einem Compound-Granulat aus Lederfasern und Polymerwerkstoff verbunden werden. Dies erfolgt in einer Extrudiermaschine, der der Polymerwerkstoff und die Lederpellets vorgemischt oder getrennt zugeführt werden. Beim Extrudiervorgang wird das Gemisch aus Lederpellets und Polymerwerkstoff homogenisiert, so dass das Compound-Granulat eine Matrix aus Polymerwerkstoff mit eingebetteten Lederfasern darstellt. Bei der Herstellung des Compound-Granulats kann dem üblicherweise an sich farblosen Polymerwerkstoff ein Farbstoff zugesetzt werden, um dem Granulat eine gewünschte Farbe zu verleihen. Grundsätzlich ist es auch möglich, bereits das Mahlgut während der Herstellung der Lederpellets mit herkömmlichen Lederfarbstoffen zu färben. Es hat sich jedoch gezeigt, dass durch die nachfolgende Warmtrocknung und andere Einflüsse die Farbbeständigkeit nicht immer mit der erforderlichen Präzision zu steuern ist. Die Färbung des Compound-Granulats durch Beigabe von Farbstoffen zu den Polymeren beim Extrudiervorgang führt jedoch zu reproduzierbaren Ergebnissen.

Dem Fachmann ist es an sich bekannt, dass die aus dem Ledermahlgut hergestellten Lederpellets in der Regel bei Temperaturen größer 180 °C den thermischen Belastungen aufgrund einer natürlichen Denaturierung nicht standhalten können und dazu neigen, im Beisein von Sauerstoff zu verbrennen und/oder Verbrennungsgerüche abzugeben. Andererseits besteht ein Bedarf nach Compound-Granulaten, die auch höheren Temperaturen standhalten.

Versuche haben gezeigt, dass bei der Herstellung des Compound-Granulats überraschend auch thermoplastische Polymerwerkstoffe verwendet werden können, deren Schmelztemperatur oberhalb 180 °C liegt. Um thermoplastische Polymerwerkstoffe dieser Art einsetzen zu können, wird gemäß der Erfindung vorgeschlagen, dass der als Thermoplast ausgebildete Polymerwerkstoff in geschmolzenem oder erweichtem Zustand auf eine Temperatur oberhalb 180 °C erhitzt wird, und dass die kalten oder vorgewärmten Lederpellets dem erhitzten Polymerwerkstoff zugesetzt und mit diesem unter Abkühlung des Gemischs vermischt werden, bevor das Fertiggemisch unter Bildung des Granulats ausgeformt wird.

Eine bevorzugte Ausgestaltung des erfindungsgemäßen Verfahrens sieht vor, dass der Polymerwerkstoff entlang einer Aufheizstrecke eines Extruders auf eine Spitzentemperatur über 180 °C unter Aufschmelzen oder Erweichen erhitzt wird, dass die Lederpellets in kaltem oder vorgewärmtem Zustand stromabwärts der Aufheizstrecke dem Polymerwerkstoff beigemischt werden und dass das so erzeugte Fertiggemisch bei gegenüber der Aufheizstrecke abgesenkter Temperatur über eine Austrittsdüse oder eine Düsenplatte ausgegeben und zu dem Compound-Granulat geformt wird. Vorteilhafterweise wird hierfür ein thermoplastischer Polymerwerkstoff mit einem Schmelz- oder Erweichungspunkt oberhalb 180 °C, vorzugsweise oberhalb 220 °C verwendet.

Das derart hergestellte Compound-Granulat ist ein weiteres Zwischenprodukt. Es besteht aus einem Granulat aus thermoplastischem Kunststoff und Lederfasern, bei welchen der thermoplastische Kunststoff einen Erweichungspunkt oberhalb 150 °C, vorzugsweise oberhalb 180 °C aufweist.

Das Compound-Granulat als Zwischenprodukt wird gemäß der Erfindung bevorzugt zur Herstellung von Formteilen mittels eines Spritzgussverfahrens verwendet. Versuche haben gezeigt, dass das Compound-Granulat in der Spritzgussmaschine grundsätzlich auch auf Temperaturen oberhalb 180 °C erhitzt werden kann, bevor es in die Kavität der Spritzgussmaschine eingespritzt wird. Die höhere Temperaturbeständigkeit ist vermutlich darauf zurückzuführen, dass die Lederfasern innerhalb des Compound-Granulats von einer Schutzschicht umgeben sind, die der Denaturierung der Lederfasern entgegenwirkt. Zusätzlich wird durch den Polymerwerkstoff der Sauerstoff verdrängt oder abgeschirmt, der eine Verbrennung der Lederfasern fördern würde. Auch durch eine geeignete Prozessführung, bei der die Verweilzeit in einer Heizzone der Spritzgussmaschine minimiert wird, kann eine Verbesserung in dieser Hinsicht erzielt werden.

Aus dem Compound-Granulat können mittels des Spritzgussverfahrens Formteile hergestellt werden. Aufgrund des Lederanteils weisen derartige Formteile eine Lederoptik und -haptik auf, die eine Verwendung zur Herstellung von Formteilen wie Handgriffe für Werkzeuge, Nordic-Walking-Stöcke, Fahrradgriffe, Sportgerätgriffe und dergleichen mehr besonders vorteilhaft macht. Für die Ummantelung von Fahrzeuglenkradkränzen ist dieses Verfahren ebenfalls gut geeignet. Bisher musste bei derartigen Anwendungen, bei denen die Grifffreundlichkeit von Lederwerkstoff gewünscht war, eine aufwändige Applikation mit Echtleder erfolgen. Die erfindungsgemäße Vorgehensweise schafft hier eine kostengünstige und damit breit einsetzbare Alternative. Für die Herstellung von Formteilen wie Spielzeugfiguren, ist das erfindungsgemäße Compound-Granulat ebenfalls geeignet, da auch hier eine Optik und Haptik entsteht, die die Figuren realistischer erscheinen lässt.

Das Compound-Granulat eignet sich darüber hinaus zur Herstellung von Folien durch Kalandrieren. Derartige Folien können überall dort zum Einsatz kommen, wo bisher reine Kunststofffolien oder Echtleder verwendet wurden.

Im Folgenden wird die Erfindung anhand der Zeichnung näher erläutert. Es zeigen
- Fig. 1: ein Blockschema für ein Verfahren zur Herstellung von Lederpellets, Compound-Granulat und Spritzgussteilen unter Verwendung von Falzspänen, die bei der Lederherstellung anfallen;
- Fig. 2: einen Schnitt durch einen Extruder zur Herstellung von Compound-Granulat;
- Fig. 3: einen Schnitt durch eine Spritzgussmaschine zur Herstellung von Spritzgussteilen unter Verwendung von Compound-Granulat als Zwischenprodukt.

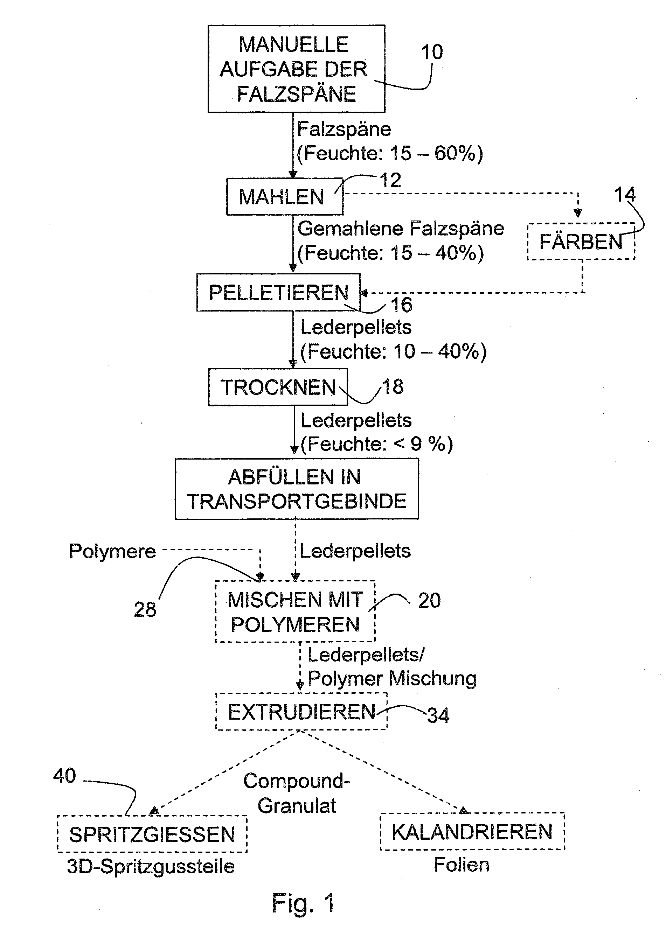

Ausgehend von dem Blockschema nach Fig. 1 werden zunächst die bei der Lederherstellung gewonnenen Falzspäne, die eine Ausgangsfeuchtigkeit von 15 - 60 Gew.-% aufweisen, über eine Aufgabestation 10 in eine Feinmühle 12 eingegeben und dort zu einer Faser- bzw. Korngröße von ca. 0,5 mm gemahlen. Gegebenenfalls können die Falzspäne nach diesem Verfahrensschritt in einem Universalmischer 14 durch Zugabe eines Farbstoffs gefärbt werden. Nach dem Mahlen weist das Material einen Feuchtegehalt von etwa 15 - 50 Gew.-% auf. Die gemahlenen Falzspäne werden nun in einer Presse 16 zu Lederpellets gepresst. Hierbei verringert sich der Feuchtegehalt weiter auf etwa 10 - 40 Gew.-%. Soweit erforderlich kann sich hieran ein Trocknungsvorgang in dem Trockner 18 anschließen, bis die Lederpellets eine Restfeuchte von < 9 Gew.-% aufweisen. Die so hergestellten Lederpellets werden als Schüttgut im Gebinde beliebiger Größe abgefüllt. Die Haltbarkeit derartiger Lederpellets beträgt Monate bis Jahre, so dass eine sofortige Weiterverarbeitung nicht erforderlich ist.

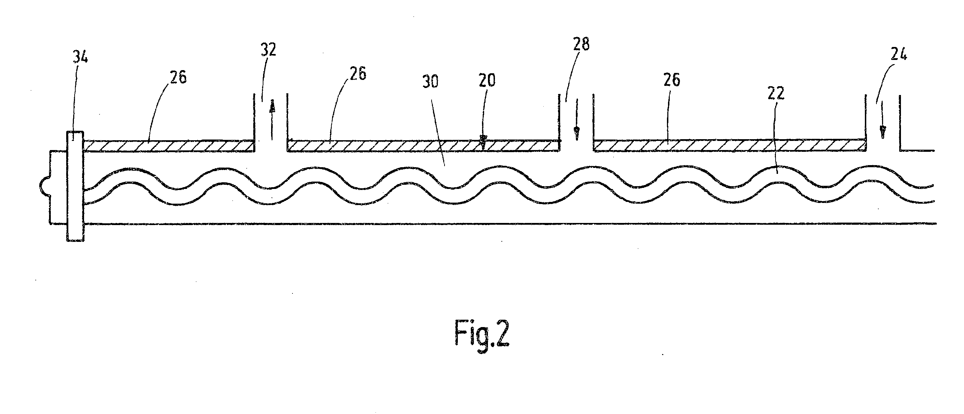

Zur weiteren Verarbeitung können die Lederpellets in speziell dafür eingerichteten Betrieben, den sogenannten Compoundeuren, zu einem Compound-Granulat weiterverarbeitet werden. Hierzu werden die Lederpellets in einem Extruder 20 entsprechend Fig. 2 mit einem thermoplastischem Polymerwerkstoff vermischt und extrudiert. Beim Extrudieren werden der üblicherweise als Granulat vorhandene Polymerwerkstoff und die Lederpellets entlang einer Misch- und Förderstrecke innerhalb des Extruders mittels Förderschnecken 22 unter Druck- und Wärmeeinwirkung zusammengeführt. Der in der Einfüllzone 24 in Form eines Granulats zugeführte Polymerwerkstoff wird zunächst entlang mehrerer Heizzonen 26 erhitzt und dabei zum Schmelzen gebracht. Die Lederpellets werden stromabwärts der Einfüllzone 24 über eine Seitenbeschickung 28 zugeführt und dem geschmolzenen Polymerwerkstoff beigemischt. Entlang der weiteren Förderstrecke 30 findet die Compoundierung statt. Dort werden die Lederpellets fein zerrieben, so dass das Extrusionsprodukt eine annähernd homogene Verteilung von Lederfasern in einer Kunststoffmatrix aufweist. Über die Entgasungsöffnung 32 wird mittels einer Vakuumpumpe überflüssige Feuchtigkeit aus der Masse entfernt. Das durch eine Düsenplatte 34 aus dem Extruder 20 strangartig ausgestoßene Materialgemisch wird seinerseits in der gewünschten Länge abgeschnitten und bildet als Verfahrensprodukt das Compound-Granulat.

Dem Polymerwerkstoff kann, soweit er nicht bereits vorher gefärbt wurde, beim Extrudiervorgang ein Farbstoff beigefügt werden, der die Farbe des Compound-Granulats und der anschließend daraus hergestellten Formteile oder Folien bestimmt.

Als thermoplastische Polymerwerkstoffe kommen bevorzugt Polypropylen, Polyethylen oder thermoplastische Elastomere in Betracht. Es hat sich gezeigt, dass bei einer geeigneten Prozessführung auch solche Polymerwerkstoffe verwendet werden können, deren Schmelztemperatur oberhalb 180 °C liegt. Dies ist insofern überraschend, als nach herkömmlichem Wissen die Maximaltemperatur, der Leder ausgesetzt werden kann, bei etwa 180 °C liegt.

Das so erzeugte Compound-Granulat kann wiederum in Gebinde beliebiger Größe abgefüllt und an den Endverarbeiter, beispielsweise die Spritzgießerei oder den Folienhersteller, geliefert werden.

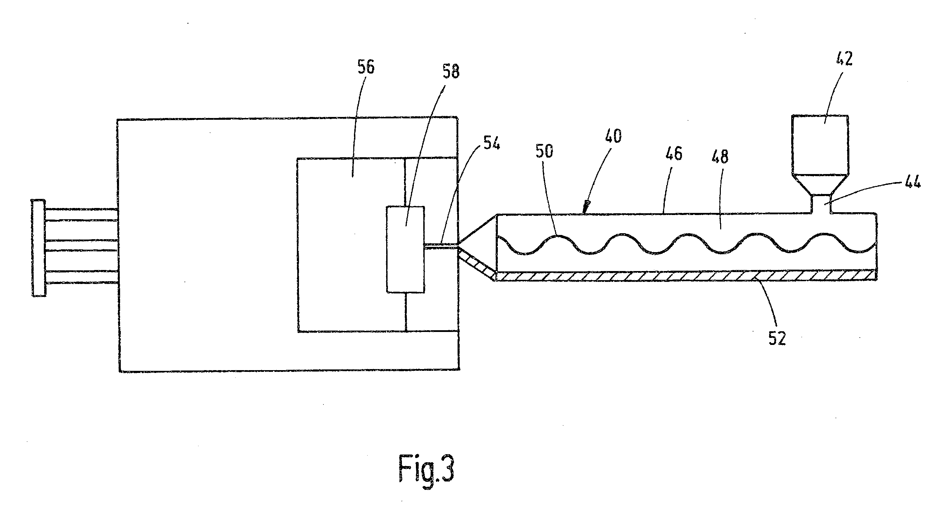

Besonders vorteilhaft ist die Verarbeitung des Compound-Granulats zu Formteilen mittels eines Spritzgussverfahrens, wobei die so hergestellten Formteile eine ledertypische Optik und Haptik aufweisen. Zu diesem Zweck wird mit einer Spritzgussmaschine 40 gemäß Fig. 3 das Compound-Granulat über einen Einfülltrichter 42 und einen Einzug 44 einer Spritzeinheit 46 zugeführt, in welcher das Granulat entlang einer Förderstrecke 48 mittels einer Schnecke 50 zerrieben, in mehreren Heizzonen 52 auf Schmelztemperatur aufgeheizt und über eine Düse 54 in ein Spritzgießwerkzeug 56 eingespritzt wird. Die Kavität 58 des Spritzgießwerkzeugs 56 bestimmt die Form und die Oberflächenstruktur des fertigen Formteils.

Mit dem Spritzgießen lassen sich Massenprodukte mit hoher Genauigkeit in kurzer Zeit herstellen. Dabei kann die Oberfläche des Bauteils nahezu frei gewählt werden. Glatte Oberflächen, Narbungen für berührungsfreundliche Bereiche, Muster und Gravuren lassen sich im Zuge des Herstellvorgangs einbringen. Für das Leder-Kunststoff-Compound kommen Teile in Frage, die dekorative Anforderungen erfüllen sollen oder die für den manuellen Gebrauch bestimmt sind, wie Griffe für Werkzeuge, Tennisschläger, Nordic-Walking-Stöcke, Lenkradkränze für Fahrzeuge und dergleichen.

Andererseits kann das Compound-Granulat durch Kalandrieren, bei dem geschmolzenes Compound-Granulat durch in der Regel mehrere, aufeinanderfolgende beheizte Walzenpaarspalte geführt und dabei auf die gewünschte Dicke gebracht wird, zu Folien verarbeitet werden, deren Einsatzspektrum dasjenige herkömmlicher Kunststofffolien abdeckt.

Zusammenfassend ist folgendes festzustellen: Die Erfindung betrifft ein Verfahren zur Herstellung von Lederpellets, ein Verfahren zur Herstellung eines Compound-Granulats aus Lederpellets und einem Polymerwerkstoff sowie die Verwendung eines derartigen Compound-Granulats zur Herstellung von Formteilen oder Folien. Die Lederpellets werden durch die folgenden Schritte hergestellt: Falzspäne werden als Abfallprodukte bei der Lederherstellung gewonnen; die Falzspäne werden zu einem Lederfasern enthaltenden Ledermahlgut zerkleinert; das Mahlgut wird zu Lederpellets gepresst; und die Lederpellets werden bis zu einem Restfeuchtegehalt von maximal 30 Gew.-% getrocknet. Die Lederpellets können mit einem Polymerwerkstoff im Verhältnis von 10 - 95 Gew.-% vermischt und unter Bildung eines Compound-Granulats als weiteres Zwischenprodukt miteinander verbunden und ausgeformt werden. Dieses Compound-Granulat kann zur Herstellung von Formteilen mittels Spritzgießen oder von Folien mittels Kalandrieren verwendet werden.

### Bezugszeichenliste:

- 10: Aufgabestation
- 12: Feinmühle
- 14: Universalmischer
- 16: Presse
- 18: Trockner
- 20: Extruder
- 22: Förderschnecke
- 24: Einfüllzone
- 26: Heizzonen
- 28: Seitenbeschickung
- 30: Förderstrecke
- 32: Entgasungsöffnung
- 34: Düsenplatte
- 40: Spritzgussmaschine
- 42: Einfülltrichter
- 44: Einzug
- 46: Spritzeinheit
- 48: Förderstrecke
- 50: Schnecke
- 52: Heizzonen
- 54: Düse
- 56: Spritzgießwerkzeug
- 58: Kavität

## Patentansprüche

1. Verfahren zur Herstellung von Lederpellets, bei dem:
- Falzspäne als Abfallprodukt bei der Lederherstellung gewonnen werden,
- die Falzspäne zu einem Lederfasern enthaltenden Ledermahlgut zerkleinert werden,
**dadurch gekennzeichnet,**
- **dass** die Falzspäne einen Ausgangsfeuchtegehalt von 15-60 Gew.% aufweisen,
- das Ledermahlgut zu Lederpellets gepresst wird,
- die Lederpellets bis zu einem Restfeuchtegehalt von maximal 30 Gew.-% getrocknet werden.

2. Verfahren nach Anspruch 1, **dadurch gekennzeichnet, dass** die Falzspäne bei einer Chromgerbung oder Gerbung mit Glutardialdehyd gewonnen werden.

3. Verfahren nach einem der Ansprüche 1 oder 2, **dadurch gekennzeichnet, dass** die Falzspäne oder Fertiglederabfälle zu einer Faser- oder Korngröße von etwa 0, 5 mm zerkleinert werden.

4. Verfahren nach einem der Ansprüche 1 bis 3, **dadurch gekennzeichnet, dass** dem Ledermahlgut in einem Mischapparat pulverförmiger Farbstoff hinzugefügt wird.

5. Verfahren nach einem der Ansprüche 1 bis 4, **dadurch gekennzeichnet, dass** die Lederpellets bei einer Temperatur von bis zu 110 °C bis zu einem Restfeuchtegehalt von < 9 Gew.-% getrocknet werden.

6. Verfahren nach einem der Ansprüche 1 bis 5, **dadurch gekennzeichnet, dass** die Lederpellets mit einem Polymerwerkstoff im Verhältnis von 10 - 95 Gew.-% vermischt und zerrieben und unter Bildung eines Compound-Granulats miteinander verbunden und ausgeformt werden.

7. Verfahren nach Anspruch 6, **dadurch gekennzeichnet, dass** dem Polymerwerkstoff vor dem Vermischen mit den Lederpellets ein Farbstoff hinzugefügt wird.

8. Verfahren nach Anspruch 6 oder 7, **dadurch gekennzeichnet, dass** das Gemisch aus Lederpellets und Polymerwerkstoff in einer Extrudiermaschine zu dem Compound-Granulat extrudiert wird.

9. Verfahren nach einem der Ansprüche 6 bis 8, **dadurch gekennzeichnet, dass** der als Thermoplast ausgebildete Polymerwerkstoff in geschmolzenem oder erweichtem Zustand auf eine Temperatur oberhalb 150 °C erhitzt wird und dass die Lederpellets in kaltem oder vorerwärmtem Zustand dem erhitzten Polymerwerkstoff zugesetzt und mit diesem unter Abkühlung des Gemischs vermischt werden, bevor sie unter Bildung des Granulats ausgeformt werden.

10. Verfahren nach Anspruch 9, **dadurch gekennzeichnet, dass** der thermoplastische Polymerwerkstoff auf eine Temperatur oberhalb 180 °C, vorzugsweise oberhalb 220 °C erhitzt wird, bevor die Lederpellets dem erhitzten Polymerwerkstoff zugesetzt werden.

11. Verfahren nach einem der Ansprüche 6 bis 10, **dadurch gekennzeichnet, dass** der aus einem Thermoplast bestehende Polymerwerkstoff entlang einer Aufheizstrecke eines Extruders auf eine Temperatur oberhalb 180 °C, vorzugsweise 220 °C unter Aufschmelzen oder Erweichen erhitzt wird, und dass die Lederpellets in kaltem oder vorgewärmtem Zustand stromabwärts der Aufheizstrecke dem Polymerwerkstoff beigemischt werden, und dass das so erzeugte Compound-Gemisch über eine Austrittsdüse ausgegeben und zu dem Compound-Granulat geformt wird.

12. Verfahren nach einem der Ansprüche 9 bis 11, **dadurch gekennzeichnet, dass** ein thermoplastischer Polymerwerkstoff mit einem Schmelz- oder Erweichungspunkt oberhalb 180 °C, vorzugsweise oberhalb 220 °C verwendet wird.

13. Verwendung des nach einem der Ansprüche 6 bis 12 hergestellten Compound-Granulats zur Herstellung von Formteilen mittels eines Spritzgussverfahrens.

14. Verwendung nach Anspruch 13, **dadurch gekennzeichnet, dass** das Compound-Granulat in einer Spritzgussmaschine auf eine Temperatur oberhalb 180 °C erhitzt wird, bevor es in eine Spritzgussform eingespritzt wird.

15. Verwendung des nach einem der Ansprüche 6 bis 12 hergestellten Compound-Granulats zur Herstellung von Folien mittels eines Kalandrierverfahrens.

16. Verwendung nach Anspruch 15, **dadurch gekennzeichnet, dass** das Compound-Granulat auf eine Temperatur oberhalb 180 °C erhitzt wird, bevor es einer Kalanderstrecke zugeführt wird.

## Claims

1. Method for producing leather pellets, in which:
- shavings are obtained as a waste product in leather production,
- the shavings are comminuted to a ground leather stock containing leather fibers,
**characterized**
- **in that** the shavings have an initial moisture content of 15-60 wt.%,
- the ground leather stock is pressed to leather pellets,
- the leather pellets are dried to a residual moisture content of a maximum of 30 wt.%.

2. Method according to claim 1, **characterized in that** the shavings are obtained in a chrome tanning or tanning with glutardialdehyde.

3. Method according to one of Claims 1 and 2, **characterized in that** the shavings or finished leather waste are comminuted to a fiber or particle size of about 0.5 mm.

4. Method according to one of Claims 1 to 3, **characterized in that** pulverulent dyestuff is added to the ground leather stock in a mixing apparatus.

5. Method according to one of Claims 1 to 4, **characterized in that** the leather pellets are dried at a temperature of up to 110 °C to a residual moisture content of < 9 wt.%.

6. Method according to one of Claims 1 to 5, **characterized in that** the leather pellets are mixed and ground with a polymer material in the ratio of 10 - 95 wt.% and are bonded to one another to form compound granules, and are shaped.

7. Method according to Claim 6, **characterized in that** a dyestuff is added to the polymer material before the mixing with the leather pellets.

8. Method according to Claim 6 or 7, **characterized in that** the mixture of leather pellets and polymer material is extruded in an extruding machine to give the compound granules.

9. Method according to one of Claims 6 to 8, **characterized in that** the polymer material formed as a thermoplastic is heated in the molten or softened state to a temperature above 150 °C, and **in that** the leather pellets in the cold or preheated state are added to the heated polymer material and mixed with this, while cooling the mixture, before they are shaped to form the granules.

10. Method according to Claim 9, **characterized in that** the thermoplastic polymer material is heated to a temperature above 180 °C, preferably above 220 °C, before the leather pellets are added to the heated polymer material.

11. Method according to one of Claims 6 to 10, **characterized in that** the polymer material comprising a thermoplastic is heated along a heating zone of an extruder to a temperature above 180 °C, preferably 220 °C, while melting or softening, and **in that** the leather pellets are admixed in the cold or preheated state to the polymer material downstream of the heating zone, and **in that** the compound mixture produced in this way is discharged via an exit die and is shaped into the compound granules.

12. Method according to one of Claims 9 to 11, **characterized in that** a thermoplastic polymer material with a melting or softening point above 180 °C, preferably above 220 °C, is used.

13. Use of the compound granules produced according to one of Claims 6 to 12 for producing molded parts by means of an injection molding process.

14. Use according to Claim 13, **characterized in that** the compound granules are heated in the injection molding machine to a temperature above 180 °C before they are injected into an injection mold.

15. Use of the compound granules produced according to one of Claims 6 to 12 for producing films by means of a calendering process.

16. Use according to Claim 15, **characterized in that** the compound granules are heated to a temperature above 180 °C before they are fed to a calendering zone.

## Revendications

1. Procédé pour la préparation de granulés de cuir, dans lequel
- des poussières de ponçage sont obtenues comme déchet lors de la production de cuir,
- les poussières de ponçage sont broyées en un produit broyé à base de cuir contenant des fibres de cuir,
**caractérisé**
- **en ce que** les poussières de ponçage présentent une teneur initiale en humidité de 15-60% en poids,
- le produit broyé à base de cuir est comprimé en granulés de cuir,
- les granulés de cuir sont séchés jusqu'à une teneur résiduelle en humidité d'au maximum 30% en poids.

2. Procédé selon la revendication 1, **caractérisé en ce que** les poussières de ponçage sont obtenues lors d'un tannage au chrome ou d'un tannage au dialdéhyde glutarique.

3. Procédé selon l'une quelconque des revendications 1 ou 2, **caractérisé en ce que** les poussières de ponçage ou les déchets de cuir fini sont broyés en une grosseur de fibre ou de grain d'environ 0,5 mm.

4. Procédé selon l'une quelconque des revendications 1 à 3, **caractérisé en ce qu'**un colorant sous forme de poudre est ajouté au produit broyé de cuir dans un appareil de mélange.

5. Procédé selon l'une quelconque des revendications 1 à 4, **caractérisé en ce que** les granulés de cuir sont séchés à une température allant jusqu'à 110°C jusqu'à teneur résiduelle en humidité < 9% en poids.

6. Procédé selon l'une quelconque des revendications 1 à 5, **caractérisé en ce que** les granulés de cuir sont mélangés et triturés avec un matériau polymère dans un rapport de 10-95% en poids et assemblés les uns aux autres et façonnés avec formation d'un granulat composite.

7. Procédé selon la revendication 6, **caractérisé en ce qu'**un colorant est ajouté au matériau polymère avant le mélange avec les granulés de cuir.

8. Procédé selon la revendication 6 ou 7, **caractérisé en ce que** le mélange de granulés de cuir et de matériau polymère est extrudé dans une extrudeuse en granulat composite.

9. Procédé selon l'une quelconque des revendications 6 à 8, **caractérisé en ce que** le matériau polymère conçu comme matériau thermoplastique est chauffé à l'état fondu ou ramolli à une température supérieure à 150°C et **en ce que** les granulés de cuir sont ajoutés, à l'état froid ou préchauffé, au matériau polymère chauffé et mélangés avec celui-ci avec refroidissement du mélange avant qu'ils ne soient façonnés avec formation du granulat.

10. Procédé selon la revendication 9, **caractérisé en ce que** le matériau polymère thermoplastique est chauffé à une température supérieure à 180°C, de préférence supérieure à 220°C avant que les granulés de cuir ne soient ajoutés au matériau polymère.

11. Procédé selon l'une quelconque des revendications 6 à 10, **caractérisé en ce que** le matériau polymère constitué par un matériau thermoplastique est chauffé le long d'une zone de chauffage d'une extrudeuse à une température supérieure à 180°C, de préférence 220°C, avec fusion ou ramollissement et **en ce que** les granulés de cuir sont mélangés, à l'état froid ou préchauffé, en aval de la zone de chauffage, au matériau polymère et **en ce que** le mélange composite ainsi obtenu est évacué via une filière de sortie et façonné en granulat composite.

12. Procédé selon l'une quelconque des revendications 9 à 11, **caractérisé en ce qu'**on utilise un matériau polymère thermoplastique présentant un point de fusion ou de ramollissement supérieur à 180°C, de préférence supérieur à 220°C.

13. Utilisation du granulat composite préparé selon l'une quelconque des revendications 6 à 12 pour la production de pièces façonnées au moyen d'un procédé de moulage par injection.

14. Utilisation selon la revendication 13, **caractérisée en ce que** le granulat composite est chauffé dans une machine de moulage par injection à une température supérieure à 180°C avant qu'il ne soit injecté dans un moule de moulage par injection.

15. Utilisation du granulat composite préparé selon l'une quelconque des revendications 6 à 12 pour la production de feuilles au moyen d'un procédé de calandrage.

16. Utilisation selon la revendication 15, **caractérisée en ce que** le granulat composite est chauffé à une température supérieure à 180°C avant qu'il ne soit introduit dans une zone de calandrage.
